# EUROPEAN PATENT APPLICATION

(11) **EP 2 884 512 A1**
(43) Date of publication of application: **17.06.2015**
(21) Application number: 13827796.7
(22) Date of filing: 07.08.2013
(51) Int. Cl.: H01G 11/22, H01G 11/54

(54) **CAPACITOR**

(30) Priority: 08.08.2012 JP 2012176495
(71) Applicant: Toyo Tanso Co., Ltd., Osaka-shi, Osaka 555-0011 (JP)
(72) Inventor: SHODAI, Yoshio, Osaka-shi Osaka 555-0011 (JP)
(74) Representative: Glawe, Delfs, Moll
(86) International application number: PCT/JP2013/071368
(87) International publication number: WO 2014/024921

(57) **Abstract**

A capacitor that has a high frequency response rate and is capable of being charged and discharged at high speed is provided.

The capacitor includes a polarized electrode containing a carbon material and an electrolyte solution, and is characterized in that the frequency response rate is 0.7 Hz or higher when the electrolyte solution is 40 mass % of sulfuric acid. The carbon material includes porous carbon having pores and a carbonaceous wall that constitutes an outer wall of the pores, the porous carbon being configured so that the pores are open pores and hollow portions thereof are connected to each other.

## Description

### TECHNICAL FIELD

The present invention relates to capacitors, and more particularly to an electric double layer capacitor using porous carbon as an electrode material.

### BACKGROUND ART

Devices for storing electric energy include secondary batteries, which store electric energy by chemical reactions at electrodes, and capacitors, which store electric energy by physical adsorption of electrolyte ions to electrodes. Because the capacitors have a structure in which ion-molecules store electric charge, they suffer little deterioration resulting from charging and discharging and exhibit excellent cycle performance. For this reason, capacitors are used in various electric devices and appliances.

In association with the recent development in electric devices and appliances, there have been demands for increasing the capacity of capacitors. Various proposals have been made concerning the techniques for increasing the capacitor capacity (for example, see Patent Literature 1).

However, in order to achieve further improvements in the characteristics of the capacitors and to increase the variety of their applications, it is insufficient to merely increase the capacity. Although there are some publications that show Bode plots indicating the relationship between phase angle and frequency (see Non-patent Literatures 1 and 2 listed below), these publications do not sufficiently analyze the electrochemical characteristics of capacitors, as a matter of fact.

### CITATION LIST

### Patent Literature

[Patent Literature 1] JP 2010-114356 A

### Non-Patent Documents

[Non-patent Literature 1] Electrochimica Acta, 55 (2010), 2817-2823
[Non-patent Literature 2] Electrochemistry Vol. 78, No. 11 (2010), 929-933

### SUMMARY OF INVENTION

### TECHNICAL PROBLEM

The present inventors have conducted an assiduous study and found that, in order to achieve further improvements in the performance of capacitors and increase the variety of applications thereof, it is necessary to improve the frequency response rate. In the past, however, no proposal has been made regarding the frequency response rate of the capacitor. Although Non-patent Literatures 1 and 2 listed above contain analysis about capacitance components, they do not mention the frequency response rate of the capacitors. The present inventors read the Bode plots shown in Non-patent Literatures 1 and 2, and found that the frequency response rate of the capacitors shown in the publications was approximately 0.05 Hz to 0.35 Hz. However, such values indicate that the frequency response rate is very low, so the capacitors cannot be charged and discharged at high speed.

In view of the foregoing problem, it is an object of the present invention to provide a capacitor that has a high frequency response rate and is capable of charging and discharging at high speed.

### SOLUTION TO PROBLEM

In order to accomplish the foregoing object, the present invention provides a capacitor comprising a polarized electrode containing a carbon material; and an electrolyte solution, characterized in that: the capacitor has a frequency response rate of 0.7 Hz or higher when the electrolyte solution is a 40 mass % sulfuric acid.

When the frequency response rate is 0.7 Hz or higher, the adsorption and desorption of ions on the surface of the carbon material are sufficiently quick. Therefore, electric current can be discharged quickly at the time of discharging, while charging can be completed quickly at the time of charging. Thus, high-speed charging and discharging are made possible.

Although it is stated that the electrolyte solution comprises 40 mass % of sulfuric acid, it should be noted that this description does not limit the electrolyte solution in the present invention to the sulfuric acid. That is, the reason why it is stated that the electrolyte solution is a 40 mass % sulfuric acid is that it is necessary to clarify what kind of electrolyte solution is used because the frequency response rate varies depending on the type of the electrolyte solution. The phrase is not meant to limit the type of the electrolyte solution to the sulfuric acid.

It is desirable that the carbon material comprise porous carbon comprising pores and a carbonaceous wall that constitutes an outer wall of the pores, the porous carbon being configured so that the pores are open pores and hollow portions thereof are connected to each other.

When the structure is such that the pores are open pores and hollow portions thereof are connected to each other (when the carbonaceous wall forms a three-dimensional network structure, as expressed in terms of the shape of the carbonaceous wall) as described above, the electrolyte solution is dispersed in the carbon material smoothly, so the adsorption and desorption of ions can be conducted quickly.

In the present description, the pores having a diameter of 2 nm or greater may be referred to as "mesopores," and the pores having a diameter of less than 2 nm may be referred to as "micropores."

In addition, the term "pore" means the pore that forms a three-dimensional network structure, for example, the pore (mesopore) that forms in a remnant produced by dissolving a mold with an acid solution and reflects the size of the mold material, and it does not include the pore (micropore) formed in the carbon wall from the wall surface of the foregoing pore. Furthermore, the pores in the present description do not include micropores unless specifically stated otherwise.

It is desirable that the pores have a diameter of from 2 nm to 150 nm.

If the pore diameter is less than 2 nm, the electrolyte solution may not diffuse into the carbon material smoothly. On the other hand, if the pore diameter exceeds 150 nm, the shape of the carbonaceous wall may not be retained.

It is desirable that the pores have a capacity of 0.2 mL/g or greater.

If the pores have a capacity of less than 0.2 mL/g, it becomes difficult to ensure a sufficient specific surface area. In addition, it is desirable that the pores have a capacity of 3.0 mL/g or less. The reason is that the carbonaceous wall needs to retain a three-dimensional network structure.

It is desirable that the porous carbon have a specific surface area of 200 m²/g.

If the specific surface area is less than 200 m²/g, it is difficult to form the three-dimensional network structure and the amount of the pores formed is insufficient, so the electrolyte solution may not diffuse into the carbon material sufficiently. It is desirable that the upper limit of the specific surface area be 2500 m²/g or less. If the specific surface area exceeds 2500 m²/g, the shape of the carbonaceous wall may not be retained, and the pores may not be formed sufficiently.

### ADVANTAGEOUS EFFECTS OF INVENTION

The present invention makes it possible to provide a capacitor that has a high frequency response rate and is capable of being charged and discharged at high speed.

### BRIEF DESCRIPTION OF DRAWINGS

[Fig. 1] Fig. 1 illustrates a manufacturing process of the present invention, wherein Fig. 1(a) shows a state in which a polyamic acid resin and magnesium oxide are mixed; Fig. 1(b) shows the mixture that has been heat-treated, and Fig. 1(c) shows porous carbon.
[Fig. 2] Fig. 2 is a TEM (transmission electron microscope) photograph of porous carbon used in cell A1.
[Fig. 3] Fig. 3 is a graph showing the relationship between frequency and phase angle in cells A1 to A4 and Z.
[Fig. 4] Fig. 4 is a graph showing complex admittance plane plots for the cells A1, A2, and A4.
[Fig. 5] Fig. 5 is a graph showing a complex admittance plane plot for the cell Z.

### DESCRIPTION OF EMBODIMENTS

Hereinbelow, embodiments of the present invention will be described.

Porous carbon as an electrode active material, a conductive agent, and a binder agent are mixed in a solvent (for example, water) to prepare an electrode slurry. This electrode slurry is coated on a current collector and then dried, to prepare a test electrode. Next, an electric double layer capacitor can be fabricated using the test electrode for the positive electrode material and using a platinum plate, for example, as the counter electrode (negative electrode), and using an aqueous sulfuric acid solution, for example, as the electrolyte solution.

The porous carbon used for the electrode active material in the present invention may be preapred in the following manner. First, a flowable material containing an organic resin is mixed with template particles comprising an alkaline-earth metal compound, such as an oxide, a hydroxide, a carbonate, and an organic salt of an alkaline-earth metal, to prepare a mixture. Next, this mixture is carbonized under a non-oxidizing atmosphere or a reduced pressure atmosphere at a temperature of, for example, 500°C or higher. Finally, the template particles are removed by a washing treatment, and thereby, porous carbon can be prepared. The porous carbon prepared in this manner has a multiplicity of pores having substantially the same size.

Here, the diameter of the pores, the pore distribution of the porous carbon, and the thickness of the carbonaceous wall can be adjusted by varying the diameter of the template particles and the type of the organic resin. Therefore, by appropriately selecting the diameter of the template particles and the type of the organic resin, it becomes possible to fabricate a porous carbon having more uniform pore diameters and a greater pore capacity.

Specifically, as the organic resin, it is preferable to use a polyimide having at least one nitrogen or fluorine atom in its unit structure. The polyimide can be obtained by polycondensation of an acid component and a diamine component. However, in this case, it is necessary that either one of or both of the acid component and the diamine component contain at least one nitrogen atom or fluorine atom.

Specifically, a polyamic acid, which is the precursor of the polyimide, is deposited, and the solvent is removed by heating, to obtain a polyamic acid film. Next, the obtained polyamic acid film is subjected to heat imidization at 200°C or higher, so that the polyimide can be prepared.

Examples of the diamine include: aromatic diamines including: 2,2-Bis(4-aminophenyl)hexafluoropropane, 2,2'-Bis(trifluoromethyl)-benzidine, and 4,4'-diaminooctafluorobiphenyl; and 3,3'-difluoro-4,4'-diaminodiphenylmethane, 3,3'-difluoro-4,4'-diaminodiphenylether, 3,3'-di(trifluorom ethyl)-4,4' -diaminodiphenyl ether, 3,3'-difluoro-4,4'-diaminodiphenylpropane, 3,3'-difluoro-4,4'-diaminodiphenylhexafluoropropane, 3.3'-difluoro-4,4'-diaminobenzophenone, 3,3',5,5'-tetrafluoro-4,4'-diaminodiphenylmethane, 3,3',5,5'-tetra(trifluoromethyl)-4,4'-diaminodiphenylmethane, 3,3',5,5'-tetrafluoro-4,4'-diaminodiphenylpropane, 3,3',5,5'-tetra(trifluoromethyl)-4,4'-diaminodiphenylpropane, 3,3',5,5'-tetrafluoro-4,4-diaminodiphenylhexafluoropropane, 1,3-diamino-5-(perfluorononenyloxy)benzene, 1,3-diamino-4-methyl-5-(perfluorononenyloxy)benzene, 1,3-diamino-4-methoxy-5-(perfluorononenyloxy)benzene, 1,3-diamino-2,4,6-trifluoro-5-(perfluorononenyloxy)benzene, 1,3-diamino-4-chloro-5-(perfluorononenyloxy)benzene, 1,3-diamino-4-pbromo-5-(perfluorononenyloxy)benzene, 1,2-diamino-4-(perfluorononenyloxy)benzene, 1,2-diamino-4-methyl-5-(perfluorononenyloxy)benzene, 1,2-diamino-4-methoxy-5-(perfluorononenyloxy)benzene, 1,2-diamino-3,4,6-trifluoro-5-(perfluorononenyloxy)benzene, 1,2-diamino-4-chloro5-(perfluorononenyloxy)benzene, 1,2-diamino-4-bromo-5-(perfluorononenyloxy)benzene, 1,4-diamino-3-(perfluorononenyloxy)benzene, 1,4-diamino-2-methyl-5-(perfluorononenyloxy)benzene, 1,4-diamino-2-methoxy-5-(perfluorononenyloxy)benzene, 1,4-diamino-2,3,6-trifluoro-5-(perfluorononenyloxy)benzene, 1,4-diamino-2-chloro-5-(perfluorononenyloxy)benzene, 1,4-diamino-2-pbromo-5-(perfluorononenyloxy)benzene, 1,3-diamino-5-(perfluorohexenyloxy)benzene, 1,3-diamino-4-methyl-5-(perfluorohcxenyloxy)benzene, 1,3-diamino-4-methoxy-5-(perfluorohexenyloxy)benzene, 1,3-diamino-2,4,6-trifluoro-5-(perfluorohexenyloxy)benzene, 1,3 -diamino-4-chloro-5 -(perfluorohexenyloxy)benzene, 1,3 -diamino-4-bromo-5-(perfluorohexenyloxy)benzene, 1,2-diamino-4-(perfluorohexenyloxy)benzene, 1,2-diamino-4-methyl-5-(perfluorohexenyloxy)benzene, 1,2-diamino-4-methoxy-5-(perfluorohexenyloxy)benzene, 1,2-diamino-3,4,6-trifluoro-5-(perfluorohexenyloxy)benzene, 1,2-diamino-4-chloro-5-(perfluorohexenyloxy)benzene, 1,2-diamino-4-bromo-5-(perfluorohexenyloxy)benzene, 1,4-diamino-3-(perfluorohexenyloxy)benzene, 1,4-diamino-2-methyl-5-(perfluorohexenyloxy)benzene, 1,4-diamino-2-methoxy-5-(perfluorohexenyloxy)benzene, 1,4-diamino-2,3,6-trifluoro-5-(perfluorohexenyloxy)benzene, 1,4-diamino-2-chloro-5-(perfluorohexenyloxy)benzene, 1,4-diamino-2-bromo-5-(perfluorohexenyloxy)benzene; and p-phenylenediamine (PPD) and dioxydianiline, which do not contain fluorine atoms. It is also possible that two or more of the foregoing aromatic diamines may be used in combination as the diamine component.

Examples of the acid component include: 4,4'-(hexafluoroisopropylidene)diphthalic anhydride (6FDA), which contains fluorine atoms; and 3,4,3',4'-biphenyltetracarboxylic dianhydride (BPDA) and pyromellitic dianhydride (PMDA), which contains no fluorine atom.

Examples of the organic solvent used as the solvent for the polyimide precursor include N-methyl-2-pyrrolidone and dimethylformamide.

The technique for imidization may follow either heat imidization or chemical imidization, as indicated by known methods [for example, see "Shin Kobunshi Jikkengaku, Vol. 3, Kobunshi no Gosei·Hanno (2)" (Experimental Polymer Science, New Edition, Vol. 3, Synthesis and reaction of polymers [2]), edited by Society of Polymer Science, Japan, Kyoritsu Shuppan, Tokyo, March 28, 1996, p. 158]. These methods of imidization do not limit the present invention.

Other than the above-described polyimide, it is possible to use a resin having a carbon yield of from 40 mass % to 85 mass %, such as phenolic resin and petroleum-based tar pitch. Moreover, even an organic resin having a carbon yield of from 4 mass % to 40 mass % may be used adequately. Examples of such an organic resin having a low carbon yield include: polyvinyl alcohol, vinyl acetate, and mixtures of these two resins; calcium citrate, magnesium citrate, barium citrate, calcium oxalate, magnesium oxalate, barium oxalate, calcium acetate, magnesium acetate, barium acetate, and n-hydrates (n = 1 to 10) of these 9 types of organic salts.

It is desirable that the template particles have substantially the same diameter. When the template particles have substantially the same diameter, the template particles are uniformly dispersed in the matrix (i.e., in the sintered substance), so the variations in the gaps between the template particles become small. As a result, it is possible to obtain a structure with a three-dimensional network structure in which the thickness of the carbonaceous wall is nearly uniform, and in which continuous pores with the same size are formed.

The reason why an alkaline-earth metal compound is used for the template particles is that, because the alkaline-earth metal compound can be removed by a weak acid or hot water (that is, the template particles can be removed without using a strong acid), the properties of the porous carbon itself can be prevented from changing in the step of removing the template particles. The use of a weak acid has an advantage that the speed of the removing becomes faster. On the other hand, the use of hot water has an advantage that it is possible to prevent the acid from remaining as an impurity. In addition, the oxide solution in which the oxide is dissolved in the step of removing the template particles can be re-used as a source material, so the manufacturing cost of the porous carbon can be reduced.

It is preferable that the carbonization of the mixture be performed under a non-oxidizing atmosphere or a reduced pressure atmosphere at a temperature of from 500°C to 1500°C. The reason is as follows. The resins with a high carbon yield are polymers. Therefore, if the temperature is lower than 500°C, carbonization is insufficient and the pores do not develop sufficiently. On the other hand, if the temperature is higher than 1500°C, the shrinkage is great and the oxide is sintered and made into a large size, which causes the pore size to become small, resulting in a small specific surface area. The non-oxidizing atmosphere refers to an argon gas atmosphere, a nitrogen atmosphere, and the like, and the reduced pressure atmosphere refers to an atmosphere at 133 Pa (1 torr) or lower.

It is desirable that the just-described porous carbon have a bulk density of from 0.1 g/cc to 1.0 g/cc. If the bulk density is less than 0.1 g/cc, it is difficult to ensure a sufficient specific surface area, and the shape of the carbonaceous wall may not be maintained. On the other hand, if the bulk density exceeds 1.0 g/cc, the three-dimensional network structure may be difficult to form, so the formation of the pores may become insufficient.

The electrolyte solution is not limited to the aqueous sulfuric acid solution. It is possible to use various other substances, examples of which include: aqueous electrolyte solutions, such as sodium sulfate, potassium sulfate, lithium sulfate, sodium hydroxide, and potassium hydroxide; organic electrolyte solutions, such as propylene carbonate, ethylene carbonate, dimethyl carbonate, diethyl carbonate, and acetonitrile; and ionic liquids that are commonly used as the electrolyte solution, such as tetraethylammonium tetrafluoroborate, triethylmethylammonium bis(trifluoro methanesulfonyl)imide, and tetraethylammonium bis(trifluoro methanesulfonyl)imide.

### EXAMPLES

### (Example 1)

### [Preparation of Porous Carbon]

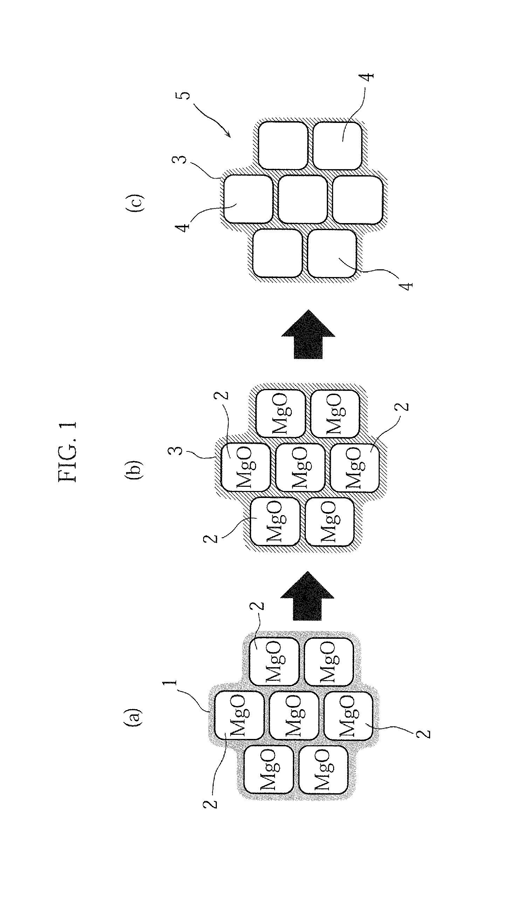

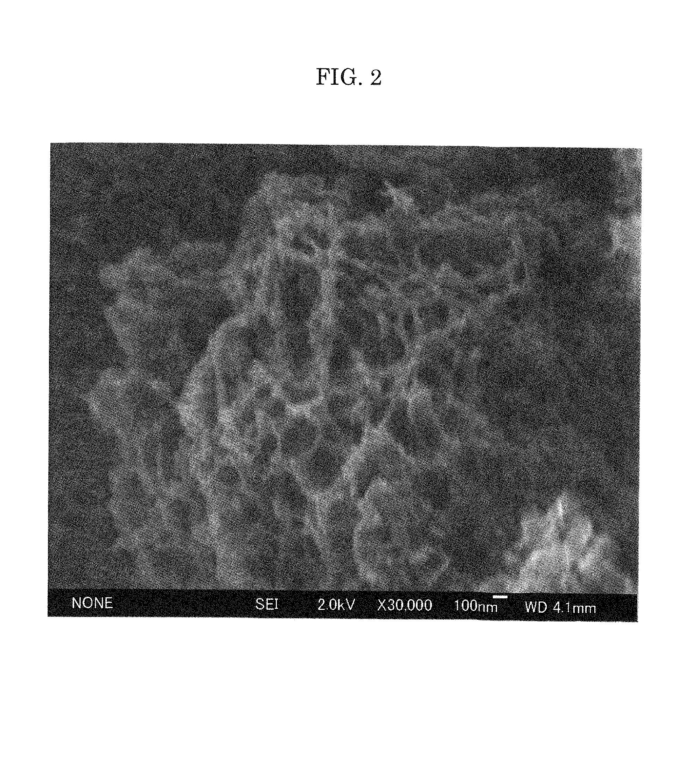

First, as illustrated in Fig. 1 (a), an organic acid salt n-hydrate (specifically, a citric acid portion of magnesium citrate nonahydrate) 1 as a carbon precursor and a magnesium portion 2 of the magnesium citrate nonahydrate (chemical reagent made by Wako Pure Chemical Industries, Ltd.) as a template precursor were used as the starting material. Next, as illustrated in Fig. 1 (b), the starting material was heat-treated in a nitrogen atmosphere at 800°C for 1 hour, to allow the organic acid salt to undergo heat decomposition. Thereby, a sintered substance provided with a carbonaceous wall 3 was obtained. Next, as illustrated in Fig. 1 (c), the resultant sintered substance was washed with a sulfuric acid solution added at a concentration of 1 mol/L, to dissolve the magnesium compound away almost completely, whereby a porous carbon 5 having a multiplicity of pores 4 was obtained. Since the porous carbon 5 is illustrated in a plane (i.e., schematically) in Fig. 1, it may be seen as if the pores 4 are not in communication with each other (i.e., the hollow portions are not connected to each other). However, in reality, it has such a structure that the pores are open pores and the hollow portions are connected to each other, as seen in Fig. 2.

### [Preparation of Electrode]

The above-described porous carbon as an electrode active material, Ketjen Black as a conductive agent, and a rubber-based binder (BM-400 made by Zeon Corp.) as a binder agent were mixed together at a mass ratio of 80 : 10 : 10 to prepare an electrode slurry. Specifically, 0.3 g of the porous carbon and 0.0375 g of KB were mixed, and a predetermined amount (2.5 mL for a standard product) of distilled water was added thereto and mixed together, to obtain a mixture. Thereafter, 0.0375 g of BM-400 was added to the resultant mixture and quickly kneaded, to thereby prepare an electrode slurry.

Next, the resultant electrode slurry was coated on a 80-mesh platinum net (coated on both sides with about 10 mm × 10 mm area), and further dried in a dryer at 90°C for 12 hours or longer, whereby a test electrode was prepared. At this time, the total amount of conductive agent, KB, and porous carbon coated was about 30 mg, and by weighing it before the electrochemical measurement, it was reflected in the applied current density.

Thereafter, preparation of the electrolyte solution and assembling of the cell were performed.

### [Preparation of Electrolyte Solution]

40 mass % aqueous sulfuric acid solution was used as the aqueous capacitor electrolyte. In this case, the presence of the dissolved oxygen in the electrolyte solution results in superposition in the amount of electric current for the oxygen evolution reaction when anodic polarization is caused. This becomes a hindrance to accurate estimation of the capacitor capacity. For this reason, 40 mL of 40 mass % aqueous sulfuric acid solution was taken out and subjected to argon bubbling for 1 hour, to prepare an electrolyte solution. It should be noted that the gas used for the bubbling is not limited to argon, but nitrogen may also be used. That said, it is preferable to use argon, which has higher oxygen removing capability.

### [Preparation of Cell]

A three-electrode cell was used as the cell. Specifically, the cell was prepared in the following manner. A working electrode, two sheets of counter electrode that sandwich the working electrode, and a reference electrode were disposed in a glass container. The previously-described test electrode was used as the working electrode, a 150 mesh platinum net was used as the counter electrode, and a Ag/AgCl electrode was used as the reference electrode. Next, this was evacuated to 0.02 MPa using a vacuum pump, and thereafter, the electrolyte solution that was treated with the above-described bubbling was introduced in the cell, followed by a further evacuation for 1 hour or longer, to complete degassing of the electrodes. Thus, a three-electrode cell was completed.

The cell prepared in this manner is hereinafter referred to as Cell A1.

### (Example 2)

A cell was fabricated in the same manner as described in Example 1 above, except that the starting material was magnesium citrate and that the heating temperature was set at 1000°C to prepare the porous carbon.

The cell prepared in this manner is hereinafter referred to as Cell A2.

### (Example 3)

A cell was fabricated in the same manner as described in Example 1 above, except that the starting material was magnesium citrate to prepare the porous carbon.

The cell prepared in this manner is hereinafter referred to as Cell A3.

### (Example 4)

A cell was fabricated in the same manner as described in Example 1 above, except that the heating temperature was set at 1000°C to prepare the porous carbon.

The cell prepared in this manner is hereinafter referred to as Cell A4.

### (Comparative Example)

A cell was fabricated in the same manner as described in Example 1 above, except that, in place of the porous carbon, an activated carbon that is commonly considered as a carbon material for capacitors (YP-17 made by Kuraray Chemical Corp.) was used as the carbon material.

The cell prepared in this manner is hereinafter referred to as Cell Z.

### (Experiment)

The specific surface area (BET specific surface area), the mesopore capacity, and the mesopore diameter were determined for the carbon materials used in Cells A1 to A4 and Z above. The results are shown in Table 1 below. The specific surface area was calculated from the results of adsorption isotherm using the BET method. The mesopore capacity was determined from the BET method, and the mesopore diameter was determined by the BJH (Barret-Joyner-Halenda) method.

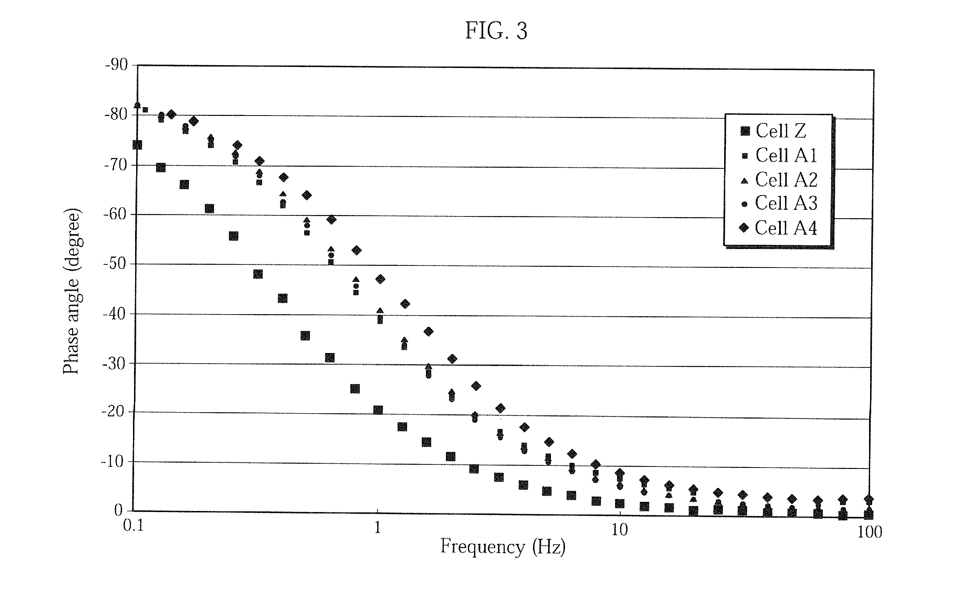

In addition, the capacitor response frequency and the transition frequency were determined for each of Cells A1 to A4 and Z. The results are shown in Table 1 and Figs. 3 to 5. The equipment used for the electrochemical measurement was Solartron 1287 and 1255B (made by Toyo Corp.). The specific measurement was carried out using a constant-voltage impedance measurement method, and 5 mV alternating voltage with respect to the corrosion potential was measured in the frequency range of 100000-0.1 Hz.

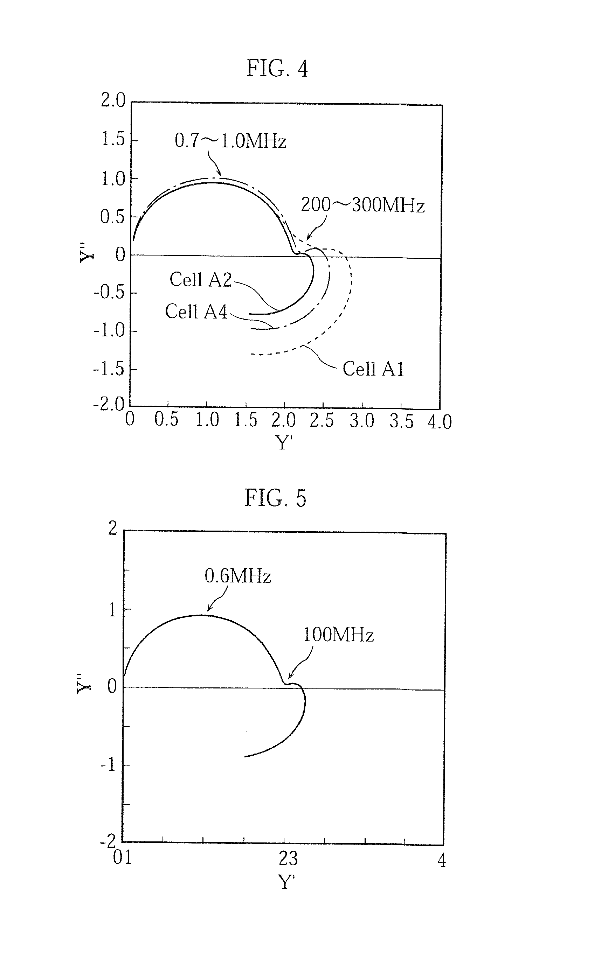

Here, the above-described capacitor response frequency refers to the frequency at -45° in Fig. 3, and the frequency at which Y' value = Y" value in Figs. 4 and 5, which corresponds to the frequency at which the charging of the capacitor is completed. The transition frequency refers to the frequency at the boundary of two rounded peaks depicted in each of Figs. 4 and 5 (in the two figures, the rounded peak on the left indicates a low frequency range, and the rounded peak on the right indicates a high frequency range), and it is considered as the response frequency from mass transport rate-limitation to capacitor behavior. It is considered that the higher the capacitor response frequency value, the more quickly the charging is expected to finish, and the higher the transition frequency, the more quickly the electrolyte solution can diffuse in the pores existing in the porous carbon.

**TABLE 1**

| Cell | Carbon material | Template particle | | Specific surface area (m²/g) | Mesopore capacity (mL/g) | Mesopore diameter (nm) | Capacitor response frequency (Hz) | Transision frequency (Hz) |
|---|---|---|---|---|---|---|---|---|
| | | Type | Size (nm) | | | | | |
| A1 | Porous carbon | MgO | 5 | 1415 | 0.72 | 5.6 | 0.80 | 251 |
| A2 | | | | 1584 | 1.36 | 5.4 | 0.90 | 251 |
| A3 | | | | 1539 | 1.30 | 5.4 | 0.84 | 200 |
| A4 | | | | 1631 | 1.47 | 5.6 | 1.15 | 251 |
| Z | | - | - | 1700 | 0.04 | Unable to calcualte | 0.37 | 100 |

As clearly seen from Table 1 and Figs. 3 to 5, it is observed that while the capacitor Z shows a low frequency response rate, 0.37 Hz, the capacitors A1 to A4 show high frequency response rates, from 0.80 to 1.15 Hz. Therefore, it is understood that the capacitors A1 to A4 can complete charging more quickly than the capacitor Z.

In addition, while the capacitor Z shows a low transition frequency, 100 Hz, the capacitors A1 to A4 show high transition frequencies, from 200 to 300 Hz. Therefore, it is understood that the diffusion rate of the electrolyte solution into the pores formed in the electrodes is higher in the capacitors A1 to A4 than in the capacitor Z.

Moreover, although the capacitor Z has a greater specific surface area than the capacitors A1 to A4, the capacitor Z has very few mesopores such that they cannot be calculated. As a consequence, the mesopore capacity is also considerably small. Therefore, the capacitor Z shows a time constant two times lower than the capacitors A1 to A4 even when the same electrolyte solution is used, because the capacitor Z has a smaller mesopore capacity.

### INDUSTRIAL APPLICABILITY

The present invention is applicable to, for example, electrode materials for capacitors.

### REFERENCE SIGNS LIST

- 1 --: Polyamic acid resin (Imide-based resin)
- 2 --: Magnesium oxide
- 3 --: Carbonaceous wall
- 4 --: Pore
- 5 --: Porous carbon

## Claims

1. A capacitor comprising:
a polarized electrode containing a carbon material; and
an electrolyte solution, **characterized in that**:
the capacitor has a frequency response rate of 0.7 Hz or higher when the electrolyte solution is a 40 mass % sulfuric acid.

2. The capacitor according to claim 1, wherein the carbon material comprises porous carbon having pores and a carbonaceous wall that constitutes an outer wall of the pores, the porous carbon being configured so that the pores are open pores and hollow portions thereof are connected to each other.

3. The capacitor according to claim 2, wherein the pores have a diameter of from 2 nm to 150 nm.

4. The capacitor according to claim 2 or 3, wherein the pores have a capacity of 0.2 mL/g or greater.

5. The capacitor according to any one of claims 2 through 4, wherein the porous carbon has a specific surface area of 200 m²/g or greater.
